Europäisches Patentamt

(19) European Patent Office

Office européen des brevets

(11) Veröffentlichungsnummer: **0 027 499**
**B1**

(12) **EUROPÄISCHE PATENTSCHRIFT**

(45) Veröffentlichungstag der Patentschrift:
06.07.83

(21) Anmeldenummer: **80104149.2**

(22) Anmeldetag: **16.07.80**

(51) Int. Cl.³: **H 02 G 3/20,** H 02 G 3/04,
F 21 V 21/02

(54) Bauteilesatz für Leuchtenbefestigung.

(30) Priorität: **18.10.79 DE 7929512 U**

(43) Veröffentlichungstag der Anmeldung:
**29.04.81 Patentblatt 81/17**

(45) Bekanntmachung des Hinweises auf die Patenterteilung:
**06.07.83 Patentblatt 83/27**

(84) Benannte Vertragsstaaten:
**AT CH DE GB LI NL**

(56) Entgegenhaltungen:
**DE-A-2 755 247**
**FR-A-1 515 461**
**FR-A-2 115 564**
**GB-A-612 162**
**US-A-3 506 232**

(73) Patentinhaber: **Temde-Werk Theodor Müller GmbH & Co.
KG, Bahnhofstrasse 25, D-4930 Detmold (DE)**

(72) Erfinder: **Baumann-Müller, Edith, Dipl. rer. pol.,
Palaisstrasse 42, D-4930 Detmold (DE)**
Erfinder: **Zender, Helmut, Friesenstrasse 8,
D-4930 Detmold (DE)**
Erfinder: **Bunte, Wolfgang, Sepkamp 6,
D-4920 Lemgo-Lieme (DE)**

(74) Vertreter: **Patentanwälte Dipl.-Ing. Bodo Thielking
Dipl.-Ing. Otto Elbertzhagen, Gadderbaumer Strasse 20,
D-4800 Bielefeld 1 (DE)**

BUNDESDRUCKEREI BERLIN

## Bauteilesatz für Leuchtenbefestigung

Die Erfindung bezieht sich auf einen Bauteilesatz zur Anbringung und Verbindung von Leuchten an Decken oder Wänden, bestehend aus Knotenelementen mit einem inneren Anschlußraum zur Befestigung der Leuchten und/oder Verzweigung elektrischer Leitungen und aus stabförmigen Verbindungselementen, die einen Kanal für die elektrischen Leitungen bilden.

Bei bekannten Bauteilesätzen dieser Art, mit denen man Leuchten in beliebigen Konfigurationen oder Rasteranordnungen an Decken oder Wänden anbringen kann, sind die Knotenelemente und die Verbindungselemente freihängend angeordnet, womit man, insbesondere durch die Verbindungselemente, bei abgehängten Leuchtensystemen lange elektrische Leitungen vermeidet und zusätzliche dekorative Elemente schafft. Andererseits sind Leuchten bekannt, die sich in einer Vielzahl nach einem Rastersystem zusammensetzen lassen, wobei die elektrischen Verbindungsleitungen unmittelbar von einer Leuchte zur anderen geführt werden können. Allen diesen Systemen haftet der Nachteil an, daß entweder die Knotenelemente und die Verbindungselemente in die Leuchten selbst integriert sind, womit vor allem auch die Montage erschwert ist, oder im Falle von Rasterfeldsystemen sind bei gewünschtem größerem Leuchtenabstand Blindfelder erforderlich, durch die man zwar grundsätzlich elektrische Leitungen hindurch verlegen kann, die jedoch stets eine eigene Decken- oder Wandbefestigung erfordern.

Darüber hinaus ist aus der GB-A-612 162 ein Verkapselungssystem für auf Wandflächen verlegte elektrische Leitungen bekannt, das geradlinige, gebogene und T-förmige Abzeigstücke in Gestalt wandseitig offener Halbschalen umfaßt. Die geradlinigen Abschnitte werden über Schellen wandseitig befestigt, über die die Verzweigungsstücke mittelbar mit festgemacht sind. Zur Anbringung und Verbindung von Leuchten an Decken- oder Wandflächen eignet sich dieses Verkapselungssystem nicht, weil weder ein Anschlußraum für die elektrischen Leuchtenanschlüsse noch eine sichere und zugleich auch einfache Befestigungsvorrichtung vorhanden ist.

Aus der US-A-3 506 232 ist eine Befestigungsanordnung für eine Einzelleuchte bekannt, die einen in die Decke einzulassenden Kasten besitzt, durch den die elektrischen Anschlußleitungen hindurchgeführt werden und der eine Befestigungseinrichtung für einen glockenförmigen Baldachin besitzt, welcher einen Anschlußraum einschließt. Eine Verbindung solcher Anschlußräume mehrerer Leuchten ist nicht vorgesehen; dazu ist insbesondere der Lampenbaldachin nicht ausgebildet, denn es erfolgt hier die elektrische Verkapselung über den eingelassenen Deckenkasten.

Der Erfindung liegt die Aufgabe zugrunde, ein variables Leuchtensystem zu schaffen, das einerseits unabhängig von der Art der gewählten Leuchten dekorativ an einer Decke oder auf einer Wand verlegbare Knotenelemente und Verbindungselemente besitzt, die zudem dadurch leicht montierbar sind, daß lediglich die Knotenelemente eine Wand- oder Deckenbefestigung erfordern, wobei zwischen die Knotenelemente Verbindungselemente von weitgehend beliebiger Länge eingefügt werden können.

Diese Aufgabe wird bei einem Bauteilesatz nach der Erfindung dadurch gelöst, daß die Knotenelemente und die Verbindungselemente als an einer Befestigungsseite offene, unter Verbindung ihrer Anschlußräume und Kanäle aneinander anschließbare Halbschalen ausgebildet sind, wobei die Knotenelemente an ihrer der Befestigungsseite gegenüberliegenden Seite eine Öffnung und ein diese von außen übergreifendes Verschlußstück haben, das mit einer decken- oder wandseitig festzumachenden, im Anschlußraum der Knotenelemente aufnehmbaren Befestigungsvorrichtung verbindbar ist, und daß die Verbindungselemente stirnseitige Kupplungsstücke besitzen, die in die Knotenelemente radial einsetzbar sind und dadurch die Verbindungselemente über die Knotenelemente befestigbar sind.

Der besondere Vorteil eines erfindungsgemäßen Bauteilesatzes liegt darin, daß die Knotenelemente und die Verbindungselemente an Decken oder an Wänden vorhandener Räume in beliebiger Anordnung angebracht werden können, wobei an einer einzigen beliebigen Stelle, über die eines der Knotenelemente oder Verbindungselemente hinweggeführt ist, die elektrische Zuleitung erfolgen kann, da im übrigen über die Verbindungselemente das weiter erforderliche Leitungssystem verlegt werden kann. Dabei ist insbesondere eine Vormontage der elektrischen Leitungen und Leitungsanschlüsse möglich, da die halbschalenartige Ausbildung der Knoten- und Verbindungselemente es erlaubt, die Knotenelemente und die Verbindungselemente nachträglich über die bereits verlegten Leitungen und die bereits angebrachten Befestigungsvorrichtungen zu stülpen, um dann allein über die Knotenelemente das gesamte System zu befestigen.

Die weiteren Vorteile der Erfindung ergeben sich aus den Unteransprüchen und aus der nachstehenden Beschreibung. Die Erfindung wird nachfolgend anhand der Zeichnung an Ausführungsbeispielen noch näher erläutert. Dabei zeigen

Fig. 1 die Ansicht eines erfindungsgemäßen Bauteilesatzes,

Fig. 2 mehrere Ansichten von Knotenelementen für einen erfindungsgemäßen Bauteilesatz,

Fig. 3 eine gesprengte perspektivische Darstellung eines Knotenelementes und eines daran anschließenden Verbindungselementes eines Bauteilesatzes nach der Erfindung,

Fig. 4 einen Schnitt durch ein weiteres Knotenelement eines erfindungsgemäßen Bauteilesatzes,

Fig. 5 einen Schnitt durch ein anderes Knotenelement eines erfindungsgemäßen Bauteilesatzes und

Fig. 6 einen Schnitt durch eine vierte Ausführungsform eines Knotenelementes für einen erfindungsgemäßen Bauteilesatz.

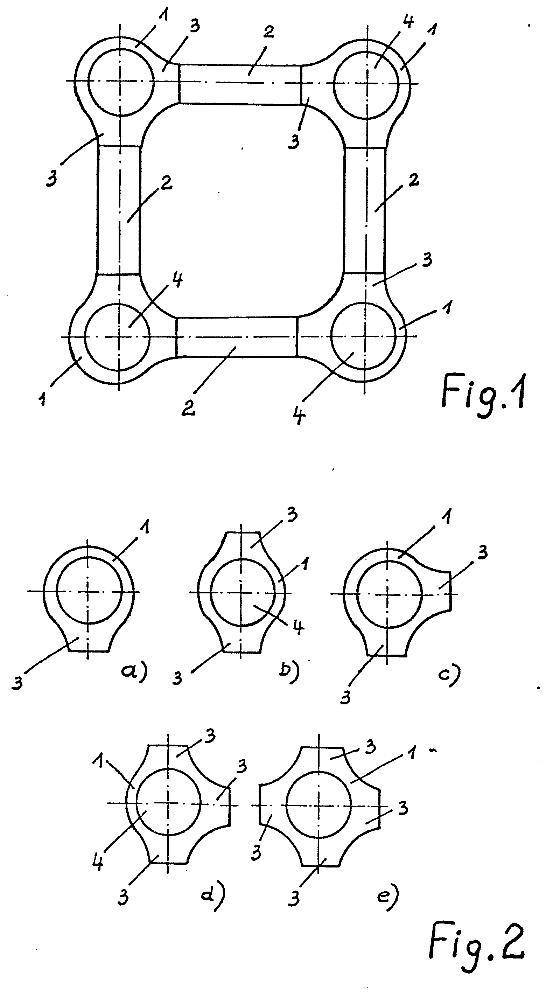

Fig. 1 zeigt eine beispielhafte Kombination von Knotenelementen 1 und Verbindungselementen 2 eines erfindungsgemäßen Bauteilesatzes, wobei diese Elemente auf einer nicht näher dargestellten Decke oder Wand angeordnet sind. Die Knotenelemente 1 besitzen beim Ausführungsbeispiel nach Fig. 1 zwei Anschlußnasen 3, die sich nach außen hin gegenüber dem diametralen Bereich der Knotenelemente 1 verjüngen. Dabei bilden sie mit ihrer vorderen Stirnfläche eine Anschlußfläche für die Verbindungselemente 2, die stabförmig ausgebildet sind. Vorteilhaft hat die Anschlußfläche der Anschlußnase 3 das gleiche Querschnittsprofil wie die stabförmigen Verbindungselemente 2, womit ein stetiger Übergang zwischen den Verbindungselementen 2 und den Knotenelementen 1 gegeben ist.

Die Knotenelemente 1 sind unter- bzw. außenseitig durch ein Verschlußstück 4 abgedeckt, das auch bündig in die Knotenelemente 1 eingelassen sein kann. Wie nachstehend noch erläutert werden wird, können die Knotenelemente 1 an der betreffenden Wand oder die Decke befestigt werden, wobei die Befestigungsvorrichtung über die lösbaren Verschlußstücke 4 zugänglich ist. Die Verbindungselemente 2 hingegen werden nicht unmittelbar an der Wand oder an der Decke befestigt, sie sind vielmehr in die Knotenelemente 1 eingehängt oder eingesteckt und über diese festgemacht. Der besondere Vorzug der Knotenelemente 1 und der Verbindungselemente 2 liegt in einer halbschalenartigen Ausbildung, so daß die Knotenelemente 1 und die Verbindungselemente 2 über bereits angebrachte Befestigungsvorrichtungen oder Leitungsabschnitte übergestülpt und über die Verschlußstücke 4 der Knotenelemente 1 befestigt werden können. Damit ergibt sich eine besonders einfache Montage des neuen Systems.

Grundsätzlich können die Anschlußnasen 3 an den Knotenelementen 1 in radialer Richtung angeordnet sein. Anders als in den Fig. 1 und 2 können insbesondere die Anschlußnasen 3 auch um andere Winkel als um 90 Grad gegeneinander versetzt sein. Die Verbindungselemente 2 können von beliebiger Länge sein, die lediglich durch die selbsttragende Ausführung eingeschränkt ist. Es lassen sich mit den Knotenelementen 1 und den diese verbindenden Verbindungselementen 2 beliebige Polygone oder offene Figuren wie S-, Z- oder auch Stern-Figuren bilden, wobei über die Verschlußstücke 4, wie weiter unten noch erläutert werden wird, die jeweiligen Leuchten entweder unmittelbar am Knotenelement 1 oder davon abgehängt angeordnet werden können. Zweckmäßig wird an einem der halbschalenartigen Knotenelemente 1 die elektrische Leitungseinführung vorgesehen und zu den übrigen Knotenelementen 1 können die elektrischen Zuleitungen durch die ebenfalls halbschalenartigen Verbindungselemente 2 verlegt werden.

Im einzelnen veranschaulicht Fig. 2 einige Ausführungsbeispiele für die Anordnung der Anschlußnasen 3 an den Knotenelementen 1. Fig. 2a) zeigt ein endseitiges Knotenelement 1 mit lediglich einer einzigen Anschlußnase 3. Beim Ausführungsbeispiel nach Fig. 2b) sind zwei Anschlußnasen 3 am Knotenelement 1 einander diametral angeordnet, während nach Fig. 2c zwei Anschlußnasen 3 um 90 Grad versetzt, wie auch beim Ausführungsbeispiel nach Fig. 1, an dem Knotenelement 1 vorgesehen sind. Beim Ausführungsbeispiel nach Fig. 2d) sind drei Anschlußnasen 3 um jeweils 90 Grad versetzt am Knotenelement 1 angeordnet, während Fig. 2e) vier solche Anschlußnasen 3 am Knotenelement 1 in regelmäßiger Anordnung wiedergibt.

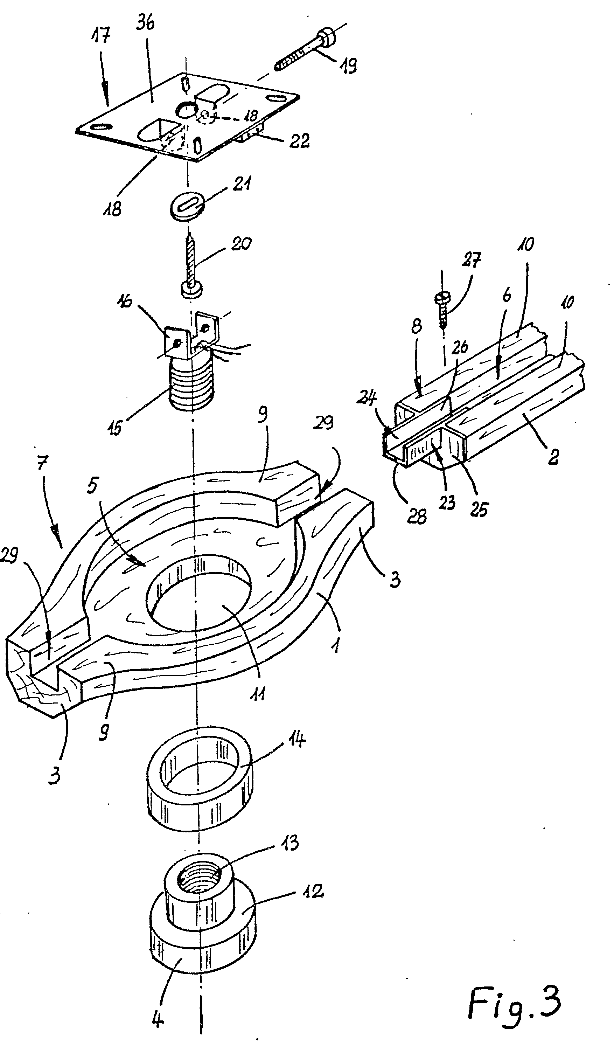

Die halbschalenartige Ausbildung der Knotenelemente 1 und der Verbindungselemente 2 erkennt man besonders in Fig. 3. Hierdurch bildet jedes Knotenelement 1 einen inneren Anschlußraum 5, der zur jeweiligen Wand oder Decke gerichtet wird. Fig. 3 zeigt demnach das Knotenelement 1 von seiner Befestigungsseite 7. In gleicher Weise besitzen die Verbindungselemente 2 einen zu ihrer Befestigungsseite 8 hin offenen Leitungskanal 6, der sich beim Anschluß der Verbindungselemente 2 an die Knotenelemente 1 mit deren Anschlußraum 5 zu einem durchgehenden Montage- oder Verlegungsraum verbindet. Dieser Raum ist bei der bestimmungsgemäßen Anbringung der Knotenelemente 1 und der Verbindungselemente 2 nach außen hin abgeschlossen, wobei seitlich davon durch breite Auflageflächen 9 an den Knotenelementen 1 und Auflageflächen 10 an den Verbindungselementen 2 für eine satte Anlage der Knotenelemente 1 und der Verbindungselemente 2 an der betreffenden Decke oder Wand gesorgt ist.

Wie Fig. 3 erkennen läßt, sind die Knotenelemente 1 und die Verbindungselemente 2 aus einem Vollmaterial geformt, wobei der Anschlußraum 5 und der Leitungskanal 6 aus dem vollen Material herausgeschnitten sind. Dies ist vor allem bei der Ausführung der Knotenelemente 1 und der Verbindungselemente 2 in Holz möglich. Diese Elemente können aber auch aus Glas, Keramik, Metall oder Kunststoff beispielsweise bestehen, wobei sie auch als Spritzgußteile ausgebildet sein können.

Wie Fig. 3 weiter zeigt, besitzen die Knotenelemente 1 an ihrer Unter- bzw. Außenseite eine Öffnung 11, die zweckmäßig bei kugeliger oder balliger Ausführung des Kerns der Knotenelemente 1 daran zentral angeordnet ist. Die Öffnung 11 dient zur Aufnahme des Verschlußstückes 4, das einen radial vorstehenden Flansch 12 besitzt, der einen größeren Durchmesser als die Öffnung 11 hat. Überdies ist beim Ausführungsbeispiel nach Fig. 3 das Verschlußstück 4 mit einer Innenverschraubung 13 ausgestattet, so daß das Verschlußstück 4 unter Mitnahme des Knotenelementes 1 gegebenenfalls unter Einlegen einer Zwischenhülse 14 auf eine Lampenfassung 15 aufgeschraubt werden kann, wobei diese Lampenfassung 15 mit einer decken- oder wandseitig festzumachenden Befestigungsvorrichtung 17 lösbar verbunden ist. Dazu ist die Fassung 15 rückwärtig auf einen U-Bügel 16 aufgeschraubt, der mit seinen Flanschen an vorstehenden Befestigungslaschen 18 einer zur Befestigungsvorrichtung 17 gehörenden Montageplatte 36 über einen Lagerbolzen 19 lösbar befestigt wird. Die Montageplatte 36 wird über einen Dübel an der betreffenden Wand oder der Decke festgemacht, wobei zentral durch die Montageplatte 36 hindurch eine Befestigungsschraube 20 geführt wird, die über eine mit einem Langloch versehene Zwischenscheibe 21 die Montageplatte 36 gegen die Decke oder die Wand verspannt. An der Montageplatte 36 sind zweckmäßig Klemmen 22 angeordnet, die zum Anklemmen der elektrischen Zuleitungen, der Leuchtenleitungen und der Verzweigungsleitungen, die durch die Verbindungselemente 2 hindurchgeführt werden, dienen. Der Anschlußraum 5 der Knotenelemente 1 ist so ausgebildet, daß darin die gesamte Befestigungsvorrichtung 17 Platz hat. Diese Befestigungsvorrichtung 17 einschließlich der beim Ausführungsbeispiel nach Fig. 3 zugehörigen Fassung 15 sowie der elektrischen Leitungen kann vormontiert werden, danach wird dann daran das Knotenelement 1 über das Verschlußstück 4 befestigt, wobei zugleich in das Knotenelement 1 die zugehörigen Verbindungselemente 2 eingesteckt oder eingehängt werden.

Für die Verbindung der Knotenelemente 1 und der Verbindungselemente 2 können beispielsweise einfache Steckzapfen in den Stirnseiten der Verbindungselemente 2 oder Anschlußnasen 3 der Knotenelemente 1 vorgesehen sein, die in entsprechende Aussparungen des jeweils anderen Teils eingreifen.

Bevorzugt wird für diese Verbindung ein Kupplungsstück 23 verwendet, das in Fig. 3 zu erkennen ist, und das zumindest auf Seiten des Verbindungselementes 2 formschlüssig in den Leitungskanal 6 eingesetzt werden kann. Dazu besteht das Kupplungsstück 23 aus einer längsseitig offenen Hohlschiene, wie beispielsweise einer U-Schiene, die an das vorzugsweise rechteckige oder quadratische Querschnittsprofil des Leitungskanals 6 der Verbindungselemente 2 angepaßt ist. Die längsseitige Öffnung 24 dieses Kupplungsstückes 23 zeigt in eingebauter Lage zur Befestigungsseite 8 des jeweiligen Verbindungselementes 2, so daß das Kupplungsstück 23 ebenso wie die Knotenelemente 2 über die aufzunehmenden elektrischen Leitungen gestülpt werden kann.

In bevorzugter Ausführung ist das Hohlschienenartige Kupplungsstück 23 mit einem radial vorstehenden Flansch 25 ausgebildet, der in einer Querschnittsebene als Symmetrieebene liegt. Das eine Ende 26 des Kupplungsstücks 23 wird im Leitungskanal 6 des Verbindungselementes 2 über eine Befestigungsschraube 27 fixiert. Das andere Ende 28 des Kupplungsstückes 23 greift bei bestimmungsgemäßer Anbringung in einen Kanalabschnitt 29 des jeweiligen Knotenelementes 1 ein, wobei dieser Kanalabschnitt 29 in den Anschlußraum 5 des Knotenelementes 1 mündet und im Querschnittsprofil dem Leitungskanal 6 des Verbindungselementes 2 entspricht, so daß darin das Ende 28 des Kupplungsstückes 23 nach Art eines Steckzapfens eingeführt werden kann. Es ist somit möglich, zugleich mit der Befestigung der Knotenelemente 1 auch die Verbindungselemente 2 anzubringen, die keiner separaten Befestigung bedürfen, wodurch die Montage besonders vereinfacht wird.

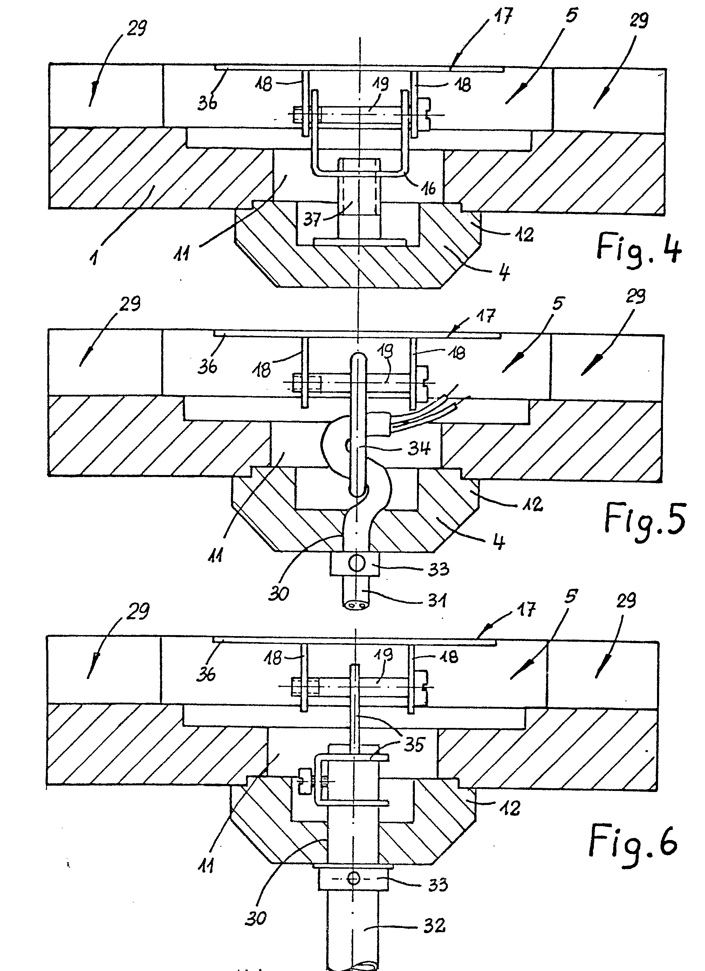

Beim Ausführungsbeispiel nach Fig. 3 sitzt die Lampenfassung 15 unmittelbar an dem Knotenelement 1, so daß die zugehörige Leuchte mit dem Knotenelement 1 eine Einheit bilden kann. Da jedoch nicht an allen Knotenelementen 1 des variablen Systems Leuchten vorgesehen werden müssen, besteht auch die Möglichkeit, das Verschlußstück 4 des Knotenelementes 1 als Blindstopfen auszubilden, was Fig. 4 veranschaulicht. Hierbei besitzt dann das Verschlußstück 4 auf seiner Innenseite eine Gewindehülse oder -stange 37, die in den Befestigungsbügel 16 der Befestigungsvorrichtung 17 beispielsweise anstelle der Fassung 15 eingeschraubt werden kann.

Sofern nicht wie beim Ausführungsbeispiel nach Fig. 3 die Leuchte unmittelbar an dem Knotenelement 1 angeordnet sein soll, sondern davon abgehängt anzubringen ist, kann das Verschlußstück 4 des Knotenelementes 1 auch mit einem Pendel 31 bzw. 32 einer Leuchte verbunden werden, wozu das Verschlußstück 4 dann eine Pendeldurchführung 30 besitzt, die in den Fig. 5 und 6 dargestellt ist.

Fig. 5 zeigt ein Schnurpendel 31, das durch das Verschlußstück 4 hindurchgeführt ist, hierbei sitzt auf dem Schnurpendel 31 ein Klemmring 33, auf dem sich das montierte Knotenelement 1 über das Verschlußstück 4 nach unten hin abstützt. Das Schnurpendel 31 ist nämlich über eine tragende Zugentlastungslasche 34 mit der Befestigungsvorrichtung 17 verbindbar. Bei der Montage des Knotenelementes 1 in Kombination mit einer Schnurpendelleuchte schiebt man zunächst den Klemmring 33, dann das Verschlußstück 4 mit seiner Durchführung 30 und schließlich das Knotenelement 1 mit seiner Öffnung 11 auf das Schnurpendel 31 auf, montiert dann die Leuchte an der Befestigungsvorrichtung 17, die zuvor an der betreffenden Wand oder Decke festgemacht wurde, an und schiebt dann den Klemmring 33 unter Mitnahme des Verschlußstückes 4 sowie des Knotenelementes 1 in Richtung auf die Befestigungsvorrichtung 17, wobei zugleich noch die in den Fig. 5 und 6 nicht gezeigten Verbindungselemente 2 radial in das Knotenelement 1 eingesetzt werden und der Klemmring 33 beispielsweise durch eine Klemmschraube in der betreffenden Höhe am Schnurpendel 31 festgelegt wird. Somit stützen sich das Knotenelement 1 und die zugehörigen Verbindungselemente 2 über das Verschlußstück 4 auf dem Klemmring 33 ab.

In gleicher Weise erfolgt die Befestigung der Knotenelemente 1 beim Ausführungsbeispiel nach Fig. 6, bei dem eine Leuchte mit einem Rohrpendel 32 vorgesehen ist. Hier erfolgt die Aufhängung des Rohrpendels 32 und der sich daran abstützenden Knotenelemente 1 und Verbindungselemente 2 über eine Anhängevorrichtung 35, die ebenfalls mit der Befestigungsvorrichtung 17 zusammenwirkt. In gleicher Weise wie beim Ausführungsbeispiel nach Fig. 5 ist zur Fixierung des Verschlußstückes 4 ein Klemmring 33 auf dem Rohrpendel 32 vorgesehen.

**Patentansprüche**

1. Bauteilesatz zur Anbringung und Verbindung von Leuchten an Decken oder Wänden, bestehend aus Knotenelementen (1) mit einem inneren Anschlußraum (5) zur Befestigung der Leuchten und/oder Verzweigung elektrischer Leitungen und aus stabförmigen Verbindungselementen (2), die einen Kanal (6) für die elektrischen Leitungen bilden, dadurch gekennzeichnet, daß die Knotenelemente (1) und die Verbindungselemente (2) als an einer Befestigungsseite (7, 8) offene, unter Verbindung ihrer Anschlußräume (5) und Kanäle (6) aneinander anschließbare Halbschalen ausgebildet sind, wobei die Knotenelemente (1) an ihrer der Befestigungsseite (7) gegenüberliegenden Seite eine Öffnung (11) und ein diese von außen übergreifendes Verschlußstück (4) haben, das mit einer decken- oder wandseitig festzumachenden, im Anschlußraum (5) der Knotenelemente (1) aufnehmbaren Befestigungsvorrichtung (17) verbindbar ist, und daß die Verbindungselemente (2) stirnseitige Kupplungsstücke (23) besitzen, die in die Knotenelemente (1) radial einsetzbar sind und dadurch die Verbindungselemente (2) über die Knotenelemente (1) befestigbar sind.

2. Bauteilesatz nach Anspruch 1, dadurch gekennzeichnet, daß die Halbschalen der Knotenelemente (1) und der Verbindungselemente (2) aus einem Vollmaterial herausgeschnitten sind.

3. Bauteilesatz nach Anspruch 2, dadurch gekennzeichnet, daß die Halbschalen aus Holz bestehen.

4. Bauteilesatz nach einem der Ansprüche 1 bis 3, dadurch gekennzeichnet, daß die Knotenelemente (1) und die Verbindungselemente (2) an ihren Befestigungsseiten (7, 8) Auflageflächen (9, 10) besitzen, welche die Anschlußräume (5) und Leitungskanäle (6) voll einfassen.

5. Bauteilesatz nach einem der Ansprüche 1 bis 4, dadurch gekennzeichnet, daß die Knotenelemente (1) eine oder mehrere radiale Anschlußnasen (3) für die Verbindungselemente (2) haben, die sich nach außen bis auf das Querschnittsprofil der Verbindungselemente (2) verjüngen.

6. Bauteilesatz nach Anspruch 5, dadurch gekennzeichnet, daß die Anschlußnasen (3) in den jeweiligen Anschlußraum (5) mündende Kanalabschnitte (29) haben, welche dasselbe Profil wie die Leitungskanäle (6) der Verbindungselemente (2) besitzen.

7. Bauteilesatz nach einem der Ansprüche 1 bis 6, dadurch gekennzeichnet, daß die Kupplungsstücke (23) aus einer längsseitig offenen Hohlschiene bestehen, die mit ihrer Öffnung (24) zur Befestigungsseite (8) hin angeordnet im Leitungskanal (6) der Verbindungselemente (2) befestigt und mit einem über deren Stirnseite überstehenden Ende (28) an eine in den Anschlußraum (5) mündende Einstecköffnung oder den Kanalabschnitt (29) der Knotenelemente (1) angepaßt ist.

8. Bauteilesatz nach Anspruch 6, dadurch gekennzeichnet, daß das Kupplungsstück (23) einen die Stirnseite der Verbindungselemente (2) und der Anschlußnasen (3) der Knotenelemente (1) überdeckenden Radialflansch (25) hat.

9. Bauteilesatz nach einem der Ansprüche 1 bis 8, dadurch gekennzeichnet, daß das Verschlußstück (4) bei einem Teil der Knotenelemente (1) ein Blindstopfen ist.

10. Bauteilesatz nach einem der Ansprüche 1 bis 9, dadurch gekennzeichnet, daß zumindest ein Teil der Verschlußstücke (4) der Knotenelemente (1) eine Durchführung (30) für ein Leuchtenpendel (31, 32) hat.

11. Bauteilesatz nach Anspruch 10, dadurch gekennzeichnet, daß auf dem Leuchtenpendel (31, 32) ein Sicherungsring (33) für das Verschlußstück (4) sitzt.

12. Bauteilesatz nach einem der Ansprüche 1 bis 10, dadurch gekennzeichnet, daß zumindest ein Teil der Verschlußstücke (4) der Knotenelemente (1) als Schraubring einer außen verschraubten Fassung (15) ausgebildet ist, die an der Befestigungsvorrichtung (17) angeordnet ist.

13. Bauteilesatz nach einem der Ansprüche 1 bis 12, dadurch gekennzeichnet, daß die Befestigungsvorrichtung (17) aus einer über ein zentrales Befestigungsmittel (20) an der Decke oder der Wand festzumachenden Montageplatte (3) besteht, an der Laschen (18) zur lösbaren Befestigung des Verschlußstückes (4) oder der Fassung (15) angeordnet sind.

**Claims**

1. Component kit for attaching and connecting lights to ceilings or walls, consisting of junction elements (1) with an inner connection space (5) for fastening the lights and/or branching electrical leads, and of bar-shaped connecting elements (2) which form a channel (6) for the electrical leads, characterised in that the junction elements (1) and the connecting elements (2) are designed as half-shells which are open on a fastening side (7, 8) and which can be joined to one another so as to connect their connection spaces (5) and channels (6), the junction elements (1) having, on their side located opposite the fastening side (7), an orifice (11) and a closure piece (4) which engages over the latter from outside and which can be connected to a fastening device (17) which is to be secured to the ceiling or wall and which can be accommodated in the connection space (5) of the junction elements (1), and in that the connecting elements (2) possess, on their end faces, coupling pieces (23) which can be inserted radially into the junction elements (1), and the connecting elements (2) can thereby be fastened via the junction elements (1).

2. Component kit according to Claim 1, characterised in that the half-shells of the junction elements (1) and of the connecting elements (2) are cut out from a solid material.

3. Component kit according to claim 2, characterised in that the half-shells consist of wood.

4. Component kit according to one of claims 1 to 3, characterised in that the junction elements (1) and the connecting elements (2) possess, on their fastening sides (7, 8), supporting surfaces (9, 10) which enclose the connection spaces (5) and the lead channels (6) completely.

5. Component kit according to one of claims 1 to 4, characterised in that the junction elements (1) have for the connecting elements (2) one or more radial connection lugs (3) which taper outwards up to the cross-sectional profile of the connecting elements (2).

6. Component kit according to claim 5, characterised in that the connection lugs (3) have channel portions (29) which open into the respective connection space (5) and which have the same profile as the lead channels (6) of the connecting elements (2).

7. Component kit according to one of claims 1 to 6, characterised in that the coupling pieces (23) consist of a longitudinally open hollow rail which, arranged with its opening (24) pointing towards the fastening side (8), is fastened in the lead channel (6) of the connecting elements (2) and, with one end (28) projecting beyond the end face of the latter, is adapted to an insertion orifice opening into the connection space (5) or to the channel portion (29) of the junction elements (1).

8. Component kit according to claim 6, characterised in that the coupling piece (23) has a radial flange (25) which overlaps the end face of the connecting elements (2) and of the connection lugs (3) of the junction elements (1).

9. Component kit according to one of claims 1 to 8, characterised in that the closure piece (4) is a blind plug in some of the junction elements (1).

10. Component kit according to one of claims 1 to 9, characterised in that at least some of the closure pieces (4) of the junction elements (1) have a duct (30) for a light pendant (31, 32).

11. Component kit according to claim 10, characterised in that a retaining ring (33) for the closure piece (4) rests on the light pendant (31, 32).

12. Component kit according to one of claims 1 to 10, characterised in that at least some of the closure pieces (4) of the junction elements (1) are designed as a screw ring of an externally threaded socket (15) which is located on the fastening device (17).

13. Component kit according to one of claims 1 to 12, characterised in that the fastening device (17) consists of an assembly plate (3) which is to be secured to the ceiling or the wall via a central fastening means (20) and on which brackets (18) for the releasable fastening of the closure piece (4) of the socket (15) are located.

**Revendications**

1. Jeu d'éléments de construction pour le montage et la fixation de lampes sur des plafonds ou des murs, formé d'éléments nodaux (1) comportant un espace de connexion intérieur (5) pour la fixation des lampes et/ou la ramification de conducteurs électriques, et d'éléments de jonction en forme de barreaux (2) qui forment un canal (6) pour les conducteurs électriques, caractérisé en ce que les éléments nodaux (1) et les éléments de jonction (2) ont la forme de coquilles ouvertes d'un côté de fixation (7, 8), pouvant être jointes les unes aux autres avec raccordement de leurs espaces de connexion (5) et de leurs canaux (6), les éléments nodaux présentant une ouverture (11) du côté opposé à leur côté de fixation (7) et comportant une pièce de fermeture (4) couvrant cette ouverture de l'extérieur, cette pièce de fermeture (4) pouvant être reliée à un dispositif de fixation (17) à fixer du côté du plafond ou du mur et pouvant être logée dans l'espace de connexion (5) des éléments nodaux (1), et les éléments de jonction (2) comportant des pièces de couplage d'about (23) qui peuvent être insérées radialement dans les éléments nodaux (1) et qui permettent de cette façon de fixer les éléments de jonction (2) par l'intermédiaire des éléments nodaux (1).

2. Jeu d'éléments de construction suivant la revendication 1, caractérisé en ce que les coquilles des éléments nodaux (1) et des éléments de jonction (2) sont découpées dans une matière pleine.

3. Jeu d'éléments de construction suivant la revendication 2, caractérisé en ce que les coquilles sont en bois.

4. Jeu d'éléments de construction suivant l'une quelconque des revendications 1 à 3, caractérisé en ce que les éléments nodaux (1) et les élements de jonction (2) présentent, sur leurs côtés de fixation (7, 8), des surfaces d'appui (9, 10) qui entourent complètant les espaces de connexion (5) et les canaux (6) des conducteurs électrisés.

5. Jeu d'éléments de construction suivant l'une quelconque des revendications 1 à 4, caractérisé en ce que les éléments nodaux (1) comportent un ou plusieurs nez de raccordement radiaux (3) pour les éléments de jonction (2) qui vont en s'amincissant vers l'extérieur jusqu'au profil en coupe des éléments de jonction (2).

6. Jeu d'éléments de construction suivant la revendication 5, caractérisé en ce que les nez de raccordement (3) comportent des segments de canaux (29) qui s'ouvrent dans l'espace de connexion (5) correspondant et qui ont le même profil que les canaux (6) des éléments de jonction (2) destinés aux conducteurs électriques.

7. Jeu d'éléments de construction suivant l'une quelconque des revendications 1 à 6, caractérisé en ce que les pièces de couplage (23) sont faites d'un profilé en bois dont un côté longitudinal est ouvert, ces pièces étant fixées dans le canal (6) des éléments de jonction (2) de manière que leur ouverture (24) soit tournée vers le côté de fixation (8) et étant adaptées par une extrémité (28) dépassant leur face d'about à une ouverture d'insertion s'ouvrant dans l'espace de connexion (5) ou au segment de canal (9) des éléments nodaux (1).

8. Jeu d'éléments de construction suivant la revendication 6, caractérisé en ce que la pièce de couplage (23) comporte une bride radiale (25) couvrant la face d'about de l'élément de jonction (2) et les nez de raccordement (3) des éléments nodaux (1).

9. Jeu d'éléments de construction suivant l'une quelconque des revendications 1 à 8, caractérisé en ce que la pièce de fermeture (4) est un bouchon obturateur pour une partie des éléments nodaux (1).

10. Jeu d'éléments de construction suivant l'une quelconque des revendications 1 à 9, caractérisé en ce qu'au moins une partie des pièces de fermeture (4) des éléments nodaux (1) présente une ouverture (30) destinée à une suspension de lampe (31, 32).

11. Jeu d'éléments de construction suivant la revendication 10, caractérisé en ce qu'une bague de sûreté (33) pour la pièce de fermeture (4) est prévue sur la suspension de lampe (31, 32).

12. Jeu d'éléments de construction suivant l'une quelconque des revendications 1 à 10, caractérisé en ce qu'au moins une partie des pièces de fermeture (4) des éléments nodaux (1) a la forme d'une bague à visser d'une monture vissée par l'extérieur (15) qui est prévue sur le dispositif de fixation (17).

13. Jeu d'éléments de construction suivant l'une quelconque des revendications 1 à 12, caractérisé en ce que le dispositif de fixation (17) est formé d'une plaque de montage (3) à fixer par l'intermédiaire d'un moyen de fixation central (20) au plafond ou au mur, sur laquelle sont montés des moyens de fixation (18) servant à fixer la pièce de fermeture (4) ou la monture (15) de manière détachable.

Fig.1

Fig.2

Fig.3

Fig.4

Fig.5

Fig.6